Europäisches Patentamt

(19) European Patent Office

Office européen des brevets

(11) Publication number: **0 069 763**
**B1**

(12) **EUROPEAN PATENT SPECIFICATION**

(45) Date of publication of patent specification: **28.08.85**

(51) Int. Cl.⁴: **C 02 F 1/20, C 02 F 9/00**

(21) Application number: **82900525.5**

(22) Date of filing: **28.12.81**

(86) International application number:
**PCT/US81/01760**

(87) International publication number:
**WO 82/02541 05.08.82 Gazette 82/19**

(54) **FUEL CELL POWER PLANT COOLANT CLEANING SYSTEM AND METHOD.**

(30) Priority: **19.01.81 US 226266**
**19.01.81 US 226267**

(43) Date of publication of application:
**19.01.83 Bulletin 83/03**

(45) Publication of the grant of the patent:
**28.08.85 Bulletin 85/35**

(84) Designated Contracting States:
**BE FR**

(56) References cited:
**FR-A-1 340 155**
**GB-A-1 185 376**
**GB-A-1 221 536**
**US-A-3 454 491**
**US-A-3 982 962**
**US-A-4 120 787**

(73) Proprietor: **UNITED TECHNOLOGIES CORPORATION**
**United Technologies Building 1, Financial Plaza**
**Hartford, CT 06101 (US).**

(72) Inventor: **GRASSO, Albert Patrick**
**25 Hayes Drive**
**Vernon, CT 06066 (US)**
Inventor: **LANE, John William**
**61 Lake Drive**
**East Hampton, CT 06424 (US)**

(74) Representative: **Bleyer, Jean et al**
**Office Dennemeyer S.à.r.l. 21-25 Allée Scheffer**
**P.O. box 41**
**L-Luxembourg (LU)**

Courier Press, Leamington Spa, England.

## Description

### Technical field

This invention relates to a fuel cell power plant coolant cleaning system in accordance with the preamble of claim 1.

The invention also concerns a method of operating such a coolant cleaning system in accordance with the preamble of claim 3.

### Background Art

Many industrial operations utilize apparatus which generates a considerable amount of heat; and this heat is often removed by circulating a coolant into heat exchange relationship with the heat source. In some operations, after the coolant is heated by the heat source it is cooled and recirculated. The extracted heat may or may not be utilized.

In many systems which utilize water as the coolant, the water is required to have a low level of dissolved and suspended solid particles. Dissolved gases are typically removed by deaerating the water. Solids may be removed by suitable filters and other devices of a type which depends upon the nature and size of the impurities and the extent to which they must be removed. Even if acceptably clean water is initially introduced into the system, it may pick up or accumulate contaminants from within the system, and these contaminants often have to be removed on either an intermittent or continuing basis.

Boilers or other apparatus that include a reservoir which remains at least partially filled with hot water may also accumulate unacceptably large amounts of impurities with time. Intermittent blowdown of these reservoirs to remove the accumulated impurities is well known in the art. For example, in U.S. Patent No. 3,215,126 steam is used to drive a turbine. The turbine exhaust is condensed and the water therefrom is deaerated. The deaerated water is passed through a heat source whereupon at least a portion of it is converted to steam. The heated water and steam is then sent to a steam drum which includes a reservoir of liquid water maintained at saturated temperature. The steam is used to drive the turbine and the liquid in the steam drum is blown down intermittently to remove impurities which build up therein. The blowdown is shown being fed to the deaerator. Other U.S. patents which show the use of filters, deaerators, and blowdown to remove contaminants include the following: 1,543,727; 1,895,635; 1,904,900; 2,001,249; 2,018,803; 2,193,795; 2,258,167; 3,200,568; and 3,668,838.

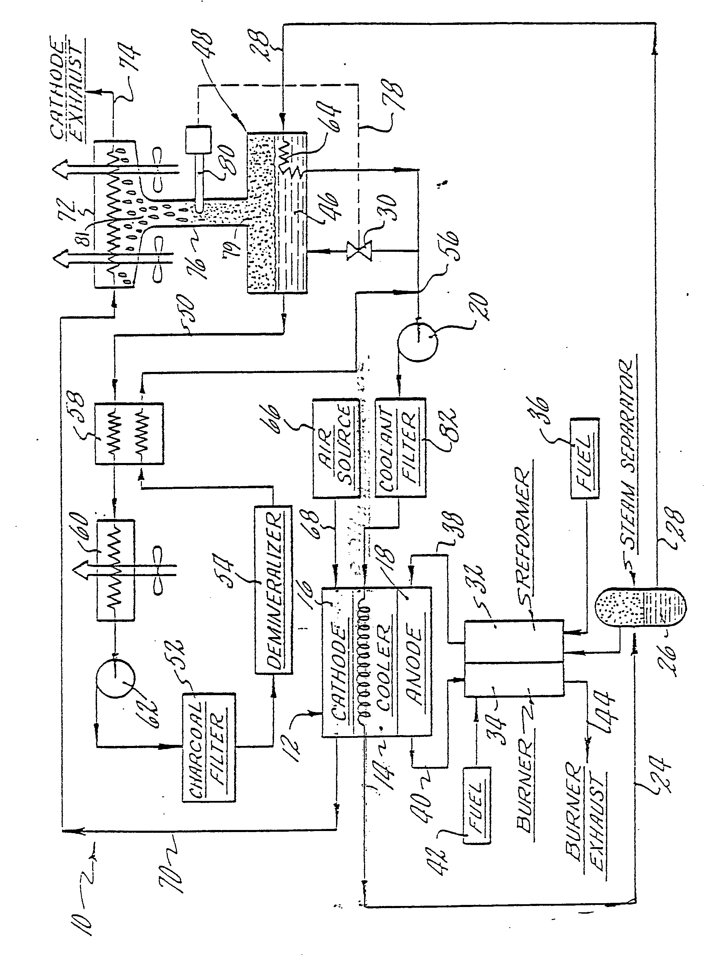

In commonly owned U.S. Patent No. 3,982,962, Fig. 1 shows a fuel cell power plant wherein water is continuously circulated and recirculated through the fuel cells as a coolant therefor. Heat from the cells converts a portion of the coolant to steam, and that steam is used in a steam reform reactor to produce hydrogen fuel for the fuel cells. Make-up water for the coolant loop is obtained by condensing water from the fuel cell reactant gas streams. The coolant water picks up impurities as it recirculates through the system and also from the impurities in the make-up water added thereto. It is desirable to have an automated system for delivering make-up water, for removing impurities from the make-up water before adding it to the recirculating coolant, and for removing impurities as they build up in the recirculating coolant loop.

A fuel cell water conditioning system and a method of operating same, such as disclosed in the preambles of claims 1 respectively 3 are known from commonly owned US patent No. 4,120,787 which describes a system for deaerating and purifying the condensate from fuel cell reactant gas exhaust streams however, an efficient, economical automated method for both cleaning the condensate as well as maintaining the purity of a continuously recirculating coolant is presently not described in the art. Of general interest relating to the state of the art in automated or self-controlled water cleaning systems is U.S. patent No. 3,454,491 which is a closed loop automated system for filtering and deionizing water. Steam flow into the system is controlled by a valve operated by a temperature sensor positioned downstream in the system to shut off the steam flow if temperatures downstream exceed the temperature limitations of an ion-exchange column.

### Disclosure of the Invention

One object of the present invention is an efficient and economical coolant water cleaning system.

A more specific object of the present invention is a water deaerating and purifying system for the coolant water of a fuel cell power plant wherein recirculating coolant water and make-up water therefor is deaerated and purified with a minimum amount of apparatus.

The present invention is characterized by coolant loop means for carrying a recirculating flow of water as the coolant through cooler means wherein at least some of the water is converted to steam, at least part of such steam being reacted with hydrocarbon fuel to produce hydrogen, by means for introducing purified deaerated water from a purification loop means into said coolant loop means at the rate required to replace said steam reacted with said hydrocarbon fuel and by means for introducing blowdown from said coolant loop means to a water reservoir, including valve means and control means associated with said valve means for opening said valve means to permit blowdown to flow into said reservoir as a function of the rate at which make-up is required to be added to said coolant loop means.

In a preferred embodiment recirculating cooling water in a coolant loop is used to cool a stack of fuel cells in a fuel cell power plant. The cooling water is heated by the fuel cells and at least partially converted to steam. The steam in the coolant loop is separated from the liquid and some or all of it may be used elsewhere in the power plant. Hot blowdown from the coolant loop is fed to a water reservoir in a deaerator and provides at least some of the heat for deaeration. Make-up water to replace the used steam is also supplied to the deaerator reservoir and is deaerated along with the blowdown. The blowdown may be automatically controlled by a valve operated by sensing the location of a steam/liquid interface within a deaeration column, wherein the location of the steam/liquid interface, and thus the amount of blowdown, is a function of the rate at which make-up water for the recirculating coolant is added to the deaerator reservoir. Deaerated make-up water, along with the blowdown is withdrawn from the reservoir in sufficient quantities to maintain the desired amount of water in the coolant loop and is purified to remove dissolved and suspended solids before it is added to the coolant loop. Most preferably the make-up water supplied to the deaerator water reservoir is obtained by condensing water from the fuel cell stack reactant gas streams, and the steam generated in the coolant loop is used in a steam reform reactor to make hydrogen fuel for the fuel cells.

The steam/liquid interface referred to above exists within the deaeration column at a location which is determined by the rate at which condensate is being added to the column and the rate at which steam is being generated in the deaerator by the heating of the water in the reservoir. The heat added to the reservoir is automatically increased or decreased as condensate flow into the deaeration column increases or decreases, respectively, by sensing the location of the steam/liquid interface and controlling a blowdown flow control valve in response thereto.

The process is self-regulating when used to continuously clean a recirculating fuel cell stack coolant. When a greater demand is placed on the fuel cells a greater amount of heat is generated. More coolant water is converted to steam which is used in the reform reactor to make hydrogen, and thus the amount of make-up water required increases. Water is produced by the fuel cells at a faster rate and is condensed into the deaerator column. The blowdown control automatically increases the amount of blowdown introduced into the water reservoir as more make-up water is required, as explained above. This increased blow-down flow rate supplies additional heat for deaerating the additional make-up water and is also the mechanism for maintaining the purity of the recirculating coolant water.

The cleaning system of this invention is highly advantageous in that the water purification apparatus cleans both the make-up water and the recirculating coolant without the necessity of having two separate purifying systems. Additionally, the size of the apparatus in the purifying system need only be large enough to handle the make-up water and only a fraction of the coolant loop flow (i.e., the blowdown). The system is entirely self-adjusting in accordance with the demands placed upon the fuel cell stack.

The foregoing and other objects, features and advantages of the present invention will become more apparent in the light of the following detailed description of preferred embodiments thereof as shown in the accompanying drawing.

Brief Description of the Drawing
The sole figure is a diagrammatic representation of a fuel cell power plant incorporating the features of the present invention.

Best Mode for Carrying Out the Invention
As an exemplary embodiment of the present invention consider the power plant 10 shown schematically in the drawing. This power plant is a·fuel cell power plant wherein electricity is generated electrochemically in stacks of fuel cells connected electrically in parallel and/or series. Heat is generated within the stack of cells as a result of the electrochemical reaction; and this heat must be removed to maintain the cells at an acceptable operating temperature. One method for cooling the cells of a stack is to pass a cooling fluid into heat exhange relationship with the stack. This may be accomplished in a variety of ways such as shown in commonly owned U.S. Patents 3,964,930; 3,990,913; 4,157,327; and 4,233,369. In those patents coolers are disposed within a stack after every third or fourth cell in the stack. The coolers comprise passageways or tubes for carrying coolant through the stack.

Referring to the drawing, a stack of fuel cells is generally represented by the numeral 12 and includes a cooler 14. Although a plurality of fuel cells would be disposed on each side of the cooler, for the purposes of simplicity in explaining the present invention the block representing the stack 12 shows only a cathode electrode 16 of one cell disposed on one side of the cooler and an anode electrode 18 of another cell disposed on the other side of the cooler.

The coolant, which in this case is water, is recirculated through a coolant loop by a pump 20. The recirculating coolant passes through the cooler 14 of the stack 12 whereupon it is heated to boiling and is at least partially converted to steam. A conduit 24 carries the two-phase coolant to a steam separator 26. Although not shown, the heated coolant may be cooled somewhat before reaching the steam separator, such as by transferring some of its heat to other liquid or gas streams within the power plant, as is well known in the art. The liquid portion of the coolant water within the steam separator travels back to the pump 20 via a conduit 28 and is recirculated through the stack 12. A portion of the recirculating coolant may be blown down through a valve 30 whose function will be more fully explained hereinafter.

In this power plant hydrogen for the fuel cells is produced in a reformer 32. In the reformer 32 a hydrocarbon fuel plus steam are reacted catalytically to produce hydrogen. Heat for the reaction is provided by a reformer burner 34. The reformer 32 receives raw fuel from a source 36 and steam from the separator 26. The hydrogen produced is fed to the anodes 18 of the fuel cells via a conduit 38. Depleted anode exhaust, which contains some unused hydrogen, is fed to the reformer burner 34 via a conduit 40 along with sufficient raw fuel from a source 42 to provide the amount of heat needed by the reformer 32. Exhaust products leave the burner via a conduit 44. Make-up water for the coolant loop to replace the steam used in the reformer is obtained from a water reservoir 46 of a deaerator 48. The water in the reservoir 46 is deaerated to remove dissolved gases by boiling as will be explained further hereinafter.

A sufficient amount of deaerated water from the reservoir 46 to maintain the desired amount of water in the coolant loop is withdrawn from the reservoir 46 via a conduit 50 and is purified by passing it through a charcoal filter 52 and a demineralizer 54 before introducing it into the coolant loop at 56. The filter 52 and demineralizer 54 remove suspended and dissolved solids. Since the operable limit of the demineralizer 54 is only about 140°F (60°C), the temperature of the make-up water from the reservoir 46 is first lowered in a regenerative heat exchanger 58 and further lowered by means of a radiator 60. Some of the heat is recaptured in the heat exchanger 58 after the water has been demineralized. A pump 62 moves the water through this purification loop.

In addition to cleaning the make-up water by means of the purification loop, the recirculating water in the coolant loop must also be cleaned of impurities which accumulate with time. In the present invention this is accomplished by blowing down, either intermittently or continuously, a sufficient portion of the recirculating coolant water into the deaerator reservoir 46 via the blowdown valve 30. In this way a portion of the recirculating coolant will be circulated through the charcoal filter and demineralizer of the purification loop. Additionally, the blowdown serves as a heat source for deaeration of the water in the reservoir. A percentage of the water passing through the blowdown valve 30 will flash to steam due to a pressure differential across the valve as established by the operating temperature of the recirculating water in the coolant loop. The injection of steam into the reservoir 46 further aids in the deaeration process. Any additional heat needed by the deaerator may be obtained from any suitable source within the power plant, or even a separate burner. In this embodiment the coolant loop is shown passing into heat exchange relationship with the water at 64 to provide some of the required heat. The injection of blowdown from the recirculating coolant water into the reservoir 46 eliminates the need for a second purification system (i.e., charcoal filter, demineralizer and attendant heat exchangers) within the coolant loop and is an efficient method for providing heat to the deaerator.

The water for the reservoir 46 may be obtained from any suitable source, such as an external water supply. Preferably the water is condensed from one or both of the fuel cell stack reactant gas streams. In this embodiment air is the oxidant for the fuel cells and is provided to the cathodes of the cells from an air source 66. The air source 66 may be a compressor driven by a turbine to provide pressurized air to the cells if the cells are designed to operate at greater than atmospheric pressure. The air enters the stack 12 via a conduit 68 and the moist cathode exhaust gases leave the stack 12 via a conduit 70. These gases are passed through a condenser 72. In the condenser 72 the gases are cooled such that the water vapor is converted to liquid. The drier cathode exhaust leaves the condenser 73 via a conduit 74. The condensed liquid falls by gravity into a vertically extending deaerator column 76 and thence into the reservoir 46 of the deaerator. A sufficient quantity of water can be obtained in this manner to make up for the steam extracted from the separator 26 and used in the reformer 32. As a greater demand is placed upon the stack 12, additional heat is generated by the cells. More steam is thereby generated in the coolant loop by the cell waste heat, and this increased quantity of steam is used in the reformer 32 to produce the additional quantity of hydrogen called for by the stack. A greater demand upon the stack also results in the production of additional water within the cells; and this additional water is removed from the cathode exhaust in the condenser 72 and is deaerated in the column 76 as it falls into the reservoir 46 for reintroduction into the coolant loop.

The greater the rate at which water is added to the reservoir 46, the greater the amount of heat required to deaerate this water. In the system of the present invention the amount of blowdown introduced into the reservoir via the valve 30 is a function of the rate at which make-up water is required to be added to the coolant loop. This provides the additional heat for deaeration. The valve 30 may be controlled, for example, as a function of the water level in the steam separator 26; however, according to the present invention the blowdown valve 30 is controlled by a temperature signal 78 from a temperature probe 80 which senses the temperature at a fixed location within the deaerating column 76 between its open lower end 79 above the water in the reservoir 46 and its upper open end 81 adjacent the condenser 72. Steam is being generated in the deaerator 48 at a rate which is a function of the amount of heat being added to the water in the reservoir 46. This steam rises into the deaerating column 76. As the steam moves up the column 76 it meets the cooler, falling condensate from the condenser 72 and is eventually itself condensed and falls back into the reservoir 46. It has been discovered that there is a rather definite steam/liquid interface within the column 76, below which the temperature within the column is at the temperature of the steam (i.e., about 212°F (101°C)) and above which the temperature drops off rather quickly towards condenser temperature. The steam liquid interface moves up and down the column depending upon the rate at which the water is being condensed into the column 76 from the condenser 72. The temperature probe 80 can readily sense when the steam/liquid interface passes by due to the sudden change in temperature. As more water is condensed due to a greater demand placed upon the stack 12, the steam/liquid interface is forced down the column 76. When the temperature probe 80 senses that the interface has passed, it opens the blowdown valve 30 to permit blowdown from the coolant loop to enter the reservoir 46. This creates additional steam in the deaerator 48 forcing the steam/liquid interface back up the column 76 until it passes the probe 80; whereupon the blowdown valve 30 is closed. Over a period of time the amount of water condensed from the exhaust stream into the reservoir is equivalent to the amount of make-up water required by the coolant loop. Thus, the rate of blowdown flow into the reservoir is actually a function of the rate at which water is added to the coolant loop from the purification loop.

This method for controlling the amount of blowdown serves two purposes. First, it assures that the appropriate amount of heat is supplied to the deaerator 48 in accordance with the amount of water required to be deaerated; and, second, it provides intermittent blowdown of the recirculating water in sufficient quantities to maintain the level of contaminants in the recirculating cooling water at an acceptable level.

The coolant cleaning system of the exemplary embodiment shown in the drawing includes an optional coolant filter 82 disposed in the coolant loop just upstream of the stack. This filter is a back-up filter to assure that no suspended solid particles pass through the cooler 14.

## Claims:

1. A coolant cleaning system for a stack of fuel cells in a fuel cell power plant comprising means for providing air as the oxidant to said stack of cell; cooler means in heat exchange relationship to said cells; means for reacting steam with a hydrocarbon fuel to produce hydrogen; means for conveying the hydrogen so produced to said stack of cells as the fuel therefor; deaerator means for removing dissolved gases from the water including a water reservoir; means for supplying makeup water to said reservoir, including condensor means, means for introducing oxydant exhausted from said stack of cells into said condenser means, and means for directing water, from said condenser means into said water reservoir; water purification loop means for removing dissolved and suspended solids from water; means for introducing purified deaerated water from said reservoir into said water purification loop means; characterized by coolant loop means for carrying a recirculating flow of water as the coolant through said cooler means, wherein at least some of said water is converted to steam and at least part of said steam is reacted with the hydrocarbon fuel; means for introducing the purified deaerated water from said purification loop means into said coolant loop means at the rate required to replace said steam reacted with said hydrocarbon fuel; means for introducing blowdown from said coolant loop means to said reservoir, including valve means and control means associated with said valve means for opening said valve means to permit blowdown to flow into said reservoir as a function of the rate at which make-up water is required to be added to the said coolant loop means.

2. The coolant cleaning system according to claim 1, characterized in that said deaerator means includes a vertically extending deaeration column having an opening at its upper end and an opening at its lower end above the water in said water reservoir, said means for directing water into said reservoir includes means for directing water from said condenser means into said opening at the upper end of said column, and said control means includes means for sensing the temperature within said deaerating column to locate a steam liquid interface therewithin and means for controlling the opening of said valve means as a function of the location of the steam liquid interface.

3. A process for coolant cleaning in a fuel cell power plant including a stack of fuel cells and coolant water circulating within a coolant loop in heat exchange relationship with the stack to cool the stack and to convert at least a portion of the circulating coolant water to steam, a portion of said water being removed from the coolant loop for use elsewhere in the power plant, at least a portion of the steam being used to process fuel for use in the cells of the stack, the process for maintaining the circulating coolant water clean and for providing clean make-up water to said coolant loop comprising supplying coolant loop make-up water to a water reservoir by condensing water from at least one of the reactant gas exhaust streams of the stack and conveying the condensed water to the reservoir; deaerating water in the water reservoir by heating said water to boiling; characterized by blowing down a portion of the water in the coolant loop and introducing the blowdown into said reservoir to provide at least a portion of the heat for the step of deaerating;

removing a portion of the deaerated water from said reservoir and purifying said removed portion by removing suspended and dissolved solids therefrom;

and adding said purified water to the coolant loop at a rate sufficient to maintain the desired rate of coolant flow passing in heat exchange relationship with the stack, wherein the amount of coolant water blown into the reservoir is a function of the rate at which purified water is added to the coolant loop and is sufficient to maintain as acceptable level of impurities in the circulating coolant water.

4. The process according to claim 3, characterized in that said power plant includes a blowdown valve which permits said step of blowing down when open and prevents said step of blowing down when closed, and the step of supplying make-up water to the reservoir includes conveying the condensed water to the reservoir via a vertical extending deaeration column having an opening at its upper end for receiving the condensate from the reactant gas stream and an opening at its lower end above the water reservoir, and the steam produced by heating water in the reservoir to boiling rises into the deaeration column, the process also including the step of controlling said blowdown valve by sensing the location of a steam/liquid interface within the deaeration column, comprising closing the valve when the steam/liquid interface is above a certain level and opening the valve when the steam/liquid interface is below a certain level.

5. The process according to claim 4, characterized in that sensing the location of a steam/liquid interface comprises sensing the temperature within said deaeration column and controlling the opening and closing of said valve as a function thereof.

**Patentansprüche**

1. Kühlmittelreinigungssystem für einen Stapel von Brennstoffzellen in einer Brennstoffzellenkraftanlage mit einer Einrichtung zum Zuführen von Luft als Oxidations-mittel zu dem Zellenstapel; mit einer Kühleinrichtung in Wärmeaustauschbeziehung mit den Zellen; mit einer Einrichtung zum Reagierenlassen von Dampf mit einem Kohlenwasserstoffbrennstoff, um Wasserstoff zu erzeugen; mit einer Einrichtung zum Fördern des so erzeugten Wasserstoffes zu dem Zellenstapel als Brennstoff für diesen; mit einer Entgasungseinrichtung zum Entfernen von gelösten Gasen aus dem Wasser, die ein Wasserreservoir aufweist; mit einer Einrichtung zum Zuführen von Ersatzwasser zu dem Reservoir, mit einer Kondensationseinrichtung, mit einer Einrichtung zum Einleiten von aus dem Zellenstapel abgegebenem Oxidationsmittel in die Kondensationseinrichtung und mit einer Einrichtung zum Leiten des Wassers aus der Kondensationseinrichtung in das Wasserreservoir; mit einer Wasserreinigungsschleifenanordnung zum Entfernen von gelösten und suspendierten Feststoffen aus dem Wasser; mit einer Einrichtung zum Einleiten von gereinigtem, entgastem Wasser aus dem Reservoir in die Wasserreinigungsschleifenanordnung; gekennzeichnet durch:

eine Kühlmittelschleifenanordnung zum Transportieren eines Umwälzwasserstroms als Kühlmittel durch die Kühleinrichtung, wobei wenigstens ein Teil des Wassers in Dampf umgewandelt und wenigstens ein Teil des Dampfes mit dem Kohlenwasserstoffbrennstoff zur Reaktion gebracht wird;

eine Einrichtung zum Einleiten des gereinigten, entgasten Wassers aus der Reinigungsschleifenanordnung in die Kühlmittelschleifenanordnung in einer Menge, die zum Ersetzen des Dampfes erforderlich ist, welcher mit dem Kohlenwasserstoffbrennstoff reagiert hat;

eine Einrichtung zum Einleiten von Abschlämmung aus der Kühlmittelschleifenanordnung in das Reservoir, mit einer Ventileinrichtung und mit einer der Ventileinrichtung zugeordneten Steuereinrichtung zum Öffnung der Ventileinrichtung, um der Abschlämmung zu gestatten, in Abhängigkeit von der Menge, in welcher Ersatzwasser der Kühlmittelschleifenanordnung zugesetzt werden muß, in das Reservoir zu fließen.

2. Kühlmittelreinigungssystem nach Anspruch 1, dadurch gekennzeichnet, daß die Entgasungseinrichtung eine sich vertikal erstreckende Entgasungskolonne aufweist, die eine Öffnung an ihrem oberen Ende und eine Öffnung an ihrem unteren Ende oberhalb des Wassers in dem Wasserreservoir hat, daß die einrichtung zum Leiten des Wassers in das Reservoir eine Einrichtung aufweist zum Leiten des Wassers aus der Kondensationseinrichtung in die Öffnung an dem oberen Ende der Kolonne und daß die Steuereinrichtung eine Einrichtung aufweist zum Abfühlen der Temperatur in der Entgasungskolonne zum Feststellen der Lage einer Dampf/Flüssikeit-Grenzfläche in dieser und eine Einrichtung zum Steuern der Öffnung der Ventileinrichtung in Abhängigkeit von der Lage der Dampf/Flüssigkeit-Grenzfläche.

3. Verfahren zur Kühlmittelreinigung in einer Brennstoffzellenkraftanwage mit einem Stapel von Brennstoffzellen und Kühlwasser, das in einer Kühlmittelschleife in Wärmeaustauschbeziehung mit dem Stapel zirkuliert, um den Stapel zu kühlen und wenigstens einen Teil des zirkulierenden Kühlwassers in Dampf zu verwandeln, wobei ein Teil des Wassers der Külmittelschleife zur Verwundung anderswo in der Kraftanlage entnommen wird, wobei wenigstens ein Teil des Dampfes zur Verarbeitung des Brennstoffes für die Verwendung in den Zellen des Stapels benutzt wird und wobei das Verfahren zum Sauberhalten des zirkulierenden Külwassers und zum Zuführen von sauberem Ersatzwasser zu der Kühlmittelschleife beinhaltet, Kühlmittelschleifenersatzwasser einem Wasserreservoir zuzuführen durch Kondensieren von Wasser aus wenigstens einem der Abgasströme der Reaktionsgase des Stapels und Fördern des kondensierten Wassers zu dem Reservoir; Entgasen des Wassers in dem Wasserreservoir durch Erhitzen des Wassers bis zum Sieden; gekennzeichnet durch Abschlämmen eines Teils des Wassers in der Kühlmittelschleife und Einleiten der Abschlämmung in das Reservoir, um wenigstens einen Teil der Wärme für den Entgasungsschritt zu liefern; Entnehmen eines Teils des entgasten Wassers aus dem Reservoir und Reinigen des entgasten Teils durch Entfernen von suspendierten und gelösten Feststoffen aus demselben; und Einleiten des gereinigten Wassers in die Kühlmittelschleife in einer Menge, die ausreicht, um die gewünschte Durchflußleistung an Kühlmittel aufrechtzuerhalten, das mit dem Stapel in Wärmeaustauschbeziehung ist, wobei die Menge an Kühlwasser, die in das Reservior abgeschlämmt wird, eine Funktion der Menge ist, in welcher gereinigtes Wasser der Kühlmittelschleife zugesetzt wird, und ausreichend ist, um einen akzeptablen Gehalt an Verunreinigungen in dem zirkulierenden Kühlwasser aufrechtzuerhalten.

4. Verfahren nach Anspruch 3, dadurch gekennzeichnet, daß die Kraftanlage ein Schlammausblaseventil enthält, welches den Schritt des Abschlämmens gestattet, wenn es offen ist, und den Schritt des Abschlämmens verhindert, wenn es geschlossen ist, und daß der Schritt des Zuführens von Ersatzwasser zu dem Reservoir beinhaltet, des kondensierte Wasser zu dem Reservoir über eine sich vertikal erstreckende Entgasungskolonne zu fördern, die eine Öffnung an ihrem oberen Ende zum Empfangen des Kondensats aus dem Reaktionsgasstrom und eine Öffnung an ihrem unteren Ende oberhalb des Wassers in dem Wasserreservoir hat, und daß der Dampf, der durch Erhitzen des Wassers in dem Reservoir bis zum Sieden erzeugt wird, in der Entgasungskolonne aufsteigt, wobei das Verfahren außerdem den Schritt beinhaltet, das Schlammausblaseventil zu steuern, indem die Lage einer Dampf/Flüssigkeit-Grenzfläche in der Entgasungskolonne abgefühlt und das Ventil geschlossen wird, wenn die Dampf/Flüssigkeit-Grenzfläche oberhalb einer gewissen Höhe ist, und das Ventil geöffnet wird, wenn die Dampf/Flüssigkeit-Grenzfläche unter einer gewissen Höhe ist.

5. Verfahren nach Anspruch 4, dadurch gekennzeichnet, daß das Abfühlen der Lage einer Dampf/Flüssigkeit-Grenzfläche beinhaltet, die Temperatur in der Entgasungskolonne abzufühlen und das Öffnen und Schließen des Ventils in Abhängigkeit davon zu steuern.

**Revendications**

1. Un système de purification de l'agent de refroidissement pour un empilage de piles à combustible dans une centrale électrique à piles à combustible, comprenant des moyens pour fournir de l'air en tant qu'oxydant à l'empilage des piles à combustible;

un réfrigérant en relation d'échange thermique avec les piles à combustible; des moyens pour faire réagir de la vapeur avec un hydrocarbure combustible afin de produire de l'hydrogène;

des moyens pour transporter l'hydrogène ainsi produit jusqu'à l'empilage de piles à combustible, afin qu'il constitue le combustible pour celles-ci;

un désaérateur pour éliminer les gaz dissous à partir de l'eau, ce désaérateur comportant un réservoir d'eau;

des moyens pour fournir de l'eau d'appoint à ce réservoir, ces derniers moyens comprenant un condenseur, des moyens pour introduire dans ce condenseur l'oxydant s'échappant de l'empilage de piles à combustible, et des moyens pour diriger l'eau;

à partir du condenseur;

vers et dans le réservoir d'eau; une boucle de purification de l'eau pour éliminer de celle-ci les particules solides dissoutes et en suspension;

des moyens pour introduire, dans le boucle de purification de l'eau, l'eau purifiée et désaérée provenant du réservoir;

caractérisé en ce qu'il comporte une boucle d'agent de refroidissement pour transporter, à travers un réfrigérant, un courant d'eau remise en circulation en tant qu'agent de refroidissement, au moins une partie de cette eau étant convertie en vapeur et au moins une partie de cette vapeur réagissant avec l'hydrocarbure combustible des moyens pour introduire, dans le boucle d'agent de refroidissement, de l'eau purifiée et désaérée provenant de la boucle de purification, et ce avec le débit nécessaire pour remplacer la vapeur ayant réagi avec l'hydrocarbure combustible;

et des moyens pour introduire un courant de soutirage, provenant de la boucle d'agent de refroidissement, das le réservoir, ces moyens comportant une vanne et des moyens de commande associés à cette vanne afin d'ouvrir ladite vanne et de permettre ainsi au courant de soutirage de s'écouler vers et dans le réservoir en fonction du débit d'eau d'appoint qui doit être ajouté à la boucle d'agent de refroidissement.

2. Le système de purification de l'agent de refroidissement suivant la revendication 1 caractérisé en ce que le désaérateur comporte un colonne de désaération s'étendant verticalement, ayant un orifice à son extrémité supérieure et un autre orifice à son extrémité inférieure au-dessus de l'eau se trouvant dans le réservoir d'eau, les moyens dirigeant l'eau vers et dans le réservoir comportent des moyens pour diriger l'eau provenant du condenseur vers et dans l'orifice prévu à l'extrémité supérieure de la colonne, et les moyens de commande comportent des moyens pour détecter la température dans la colonne de désaération, afin de déterminer l'emplacement, dans cette colonne, d'une interface vapeur/liquide, et des moyens pour commander l'ouverture de la vanne en fonction de l'emplacement de l'interface vapeur/liquide.

3. Le procédé de purification de l'agent de refroidissement dans une centrale électrique à piles à combustible comportant un empilage de piles à combustible et de l'eau de refroidissement circulant dans une boucle de refroidissement en étant en contact d'échange thermique avec l'empilage, afin de refroidir cet empilage et de convertir au moins une partie de l'eau de refroidissement en circulation en vapeur, une partie de cette eau étant extraite de la boucle de l'agent de refroidissement afin d'être utilisée ailleurs dans la centrale électrique, au moins une partie de la vapeur étant utilisée afin de traiter le combustible destiné à être utilisé dans les piles à combustible de l'empilage, le procédé pour maintenir propre l'eau de refroidissement en circulation et pour fournir de l'eau d'appoint propre à la boucle de refroidissement consistant à fournir l'eau d'appoint pour la boucle d'agent de refroidissement à réservoir d'eau en condensant de l'eau à partir d'au moins un des courants d'échappement de gaz réactif de l'empilage des piles à combustible et à diriger l'eau condensée vers le réservoir;

7

à désaérer l'eau dans le réservoir d'eau en chauffant cette eau à l'ébullition;

caractérisé en ce qu'on soutire une partie de l'eau se trouvant dans le boucle d'agent de refroidissement et on introduit le courant de soutirage dans le reservoir afin de fournir au moins une partie de la chaleur nécessaire pour l'étape de désaération;

on extrait une partie de l'eau désaérée à partir du réservoir et on purifie la partie ainsi extraite en en éliminant les particules solides dissoutes et en suspension;

et on ajoute l'eau ainsi purifiée à la boucle d'agent de refroidissement avec un débit suffisant pour maintenir le débit désiré d'agent de refroidissement s'écoulant en étant en contact d'échange thermique avec l'empilage de piles à combustible, la quantité de courant de soutirage d'eau de refroidissement introduite dans le réservoir étant fonction du débit avec lequel l'eau purifiée est ajoutée à la boucle d'agent de refroidissement et étant suffisante pour maintenir un niveau acceptable d'impuretés dans l'eau de refroidissement en circulation.

4. Le procédé suivant la revendication 3 caractérisé en ce que la centrale électrique comporte une vanne de soutirage qui permet de réaliser l'étape de soutirage lorsqu'elle est ouverte et au contraire d'empêcher cette étape lorsqu'elle est fermée, et en ce que l'étape de fourniture d'eau d'appoint au réservoir consiste à diriger l'eau condensée en direction du réservoir, à travers une colonne de désaération s'étendant verticalement, ayant un orifice à son extrémité supérieure pour recevoir le condensat provenant du courant de gaz réactif et une ouverture à son extrémité inférieure, au-dessus de l'eau se trouvant dans réservoir d'eau la vapeur produite par suite du chauffage, à l'ébullition, de l'eau se trouvant dans le réservoir s'élevant dans la colonne de désaération, le procédé comportant également une étape de commande de la vanne de soutirage consistant à détecter l'emplacement d'une interface vapeur/liquide dans la colonne de désaération, à fermer la vanne lorsque l'interface vapeur/liquide se trouve au-dessus d'un niveau déterminé et au contraire à ouvrir cette vanne lorsque l'interface vapeur/liquide se trouve en dessous d'un niveau déterminé.

5. Le procédé suivant la revendication 4 caractérisé en ce que détection de l'emplacement de l'interface vapeur/liquide consiste à détecter la température dans la colonne de désaération et à commander l'ouverture et la fermeture de la vanne en fonction de cette température.